# EUROPEAN PATENT APPLICATION

(11) **EP 1 519 087 A1**
(43) Date of publication of application: **30.03.2005**
(21) Application number: 04255812.2
(22) Date of filing: 23.09.2004
(51) Int. Cl.: F16J 9/26, F16J 9/00, F02F 5/00, C25D 3/04, C25D 15/02, C23C 30/00, C23C 4/00

(54) **Piston ring having chromium coating**

(30) Priority: 26.09.2003 US 672488
(71) Applicant: DANA CORPORATION, Toledo, OH 43697 (US)
(72) Inventor: Smith, Thomas J., Muskegon, Michigan 49441 (US)
(74) Representative: Giles, Ashley Simon

(57) **Abstract**

A piston ring having a first coating of nodular thin dense chromium is disclosed. The first coating is preferably provided on upper and lower radially extending surfaces of the piston ring. Further, the first coating is provided on a radially inner vertical surface of the piston ring. A radially outer vertical surface of the piston ring preferably includes a second coating of a thermal spray. The first coating of nodular thin dense chromium is applied by an Armoloy® process. The first coating provides improved wear resistance and a smooth surface for piston rings received in piston grooves. This abstract is provided to comply with the rules requiring an abstract that will allow a searcher or other reader to quickly ascertain the subject matter of the technical disclosure. It is submitted with the understanding that it will not be used to interpret or limit the scope or meaning of the claims.

## Description

### Field of Invention

The present invention relates to a piston ring having a chromium coating, and more particularly to a piston ring having a coating of nodular thin dense chromium applied by an Armoloy® process.

### Background of the Invention

Piston rings are typically received within an annular groove disposed about an outer periphery of a piston. The piston is reciprocated within a cylinder of an internal combustion engine. The piston compresses fluids, such as gases, within a combustion chamber of the cylinder. These fluids are ignited and expand within the combustion chamber thereby forcing the piston away from the point of ignition.

The primary function of piston rings is to provide an effective seal of the gases, called "blow-by control", and is accomplished by placing a first piston ring, called a compression seal, near an uppermost portion of the piston. The compression seal is designed to seal during an up-stroke of the piston to compress the gases within the chamber. A secondary function of piston rings is to prevent excess lubricating oil from entering the chamber. To accomplish the secondary function, a second piston ring, called an oil seal, is placed below the compression seal to prevent oil from being carried up into the chamber.

Known piston rings are traditionally made of cast iron or steel and may include a specially treated surface or additional layers of material to increase the wear resistance or durability of the piston ring. Typically, surface treatments or additional layers of material are applied to the radially outer vertical surface of the piston ring that is in contact with the cylinder wall of the combustion chamber. Piston rings also have upper and lower radial extending surfaces, but these surfaces are generally not treated in order to reduce the overall manufacturing costs of the piston rings.

Piston rings of today's higher efficiency engines must function in harsher operating environments than piston rings of traditional internal combustion engines. Today, many piston rings are typically formed with a hard surface treatment layer such as chromium plating film, thermal spray, nitrided layer or physical vapor deposition film. Still, these treatments are typically applied to only the radially outer vertical surface of the piston ring. Regardless, piston rings with these hard surface treatment layers are still prone to wear, especially when subjected to the elevated temperatures and pressures present in highly efficient engines.

Accordingly, there is a need for an improved piston ring that can withstand the harsh operating environment of today's engines.

### SUMMARY OF THE INVENTION

The present invention is directed to a piston ring comprising a plurality of surfaces. At least one of the plurality of surfaces includes a first coating of nodular thin dense chromium. Specifically, the piston ring comprises upper and lower radially extending surfaces each including the first coating. Optionally, a radially inner vertical surface of the piston ring may also include the first coating of nodular thin dense chromium. A radially outer vertical surface of the piston ring preferably includes a second coating of a thermal spray and may also include the coating of nodular thin dense chromium. The first coating of nodular thin dense chromium is applied by an Armoloy® process.

### BRIEF DESCRIPTION OF THE DRAWINGS

Figure 1 is a piston disposed in a cylinder bore and having piston rings installed in circumferential grooves of the piston;

Figure 2 is a piston ring of the present invention; and

Figure 3 is a partial cross-sectional view taken along lines 3-3 of Figure 1.

### DETAILED DESCRIPTION OF THE PREFERRED EMBODIMENTS

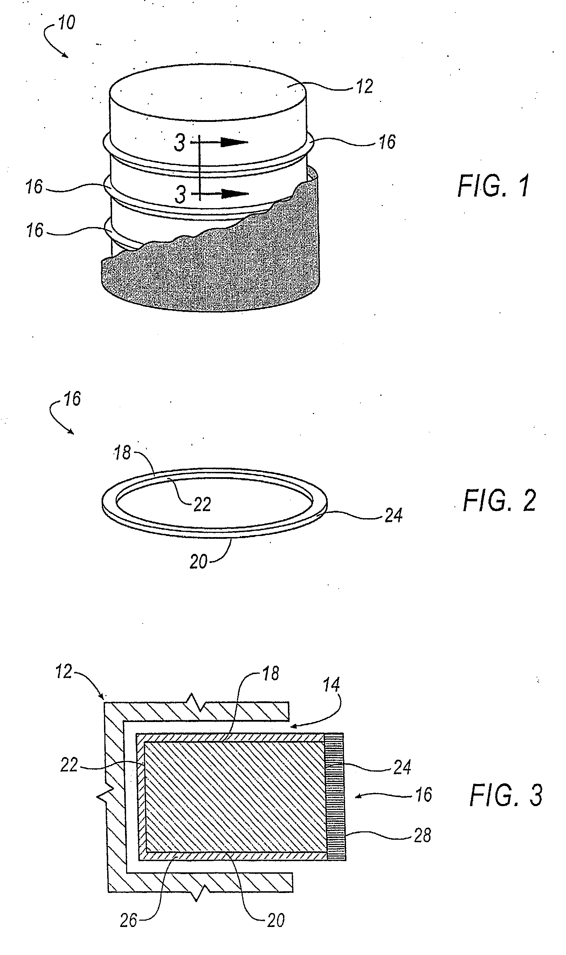

Referring now to Figs. 1-3, a piston assembly 10 is illustrated according to an embodiment of the invention. The piston assembly 10 includes a piston 12 having at least one circumferential groove 14, as best seen in Figure 3. A piston ring 16 is typically installed within the groove 14. It is common for the piston 12 to have two or more grooves 14, thereby also having two or more piston rings 16, to ensure efficient sealing of combustion chamber gasses and to also ensure minimal flow of lubricating oil into the combustion chamber.

As shown in Figures 2 and 3, the illustrated embodiment of the piston ring 16 includes upper and lower radially extending surfaces 18 and 20, respectively. Further, the piston ring 16 includes a radially inner vertical surface 22 and a radially outer vertical surface 24.

In the illustrated embodiment of the present invention, the upper and lower radially extending surfaces 18, 20 are each coated with a first coating 26 of nodular thin dense chromium to improve wear resistance of the piston ring 16 in the piston groove 14. Further, the radially inner vertical surface 22 may also include the first coating 26 of the nodular thin dense chromium. However, the present invention contemplates coating any one of the plurality of surfaces 18, 20, 22, 24 of the piston ring 16.

Meanwhile, the radially outer vertical surface 24 of the piston ring 16 preferably does not include the first coating 26. However, the radially outer vertical surface 24 does have a second coating 28 preferably of a thermal spray, as known by one skilled in the art. As an alternative embodiment, the radially outer vertical surface 24 may include the first coating 26, but applied over the second coating 28. As understood by one skilled in the art, it is generally preferable to not apply the first coating 26 to the radially outer vertical surface 24 to avoid chemical incapability between the chromium of the first coating 26 and chemical components of the thermal spray of the second coating 28.

In the preferred embodiment of the present invention, the first coating 26 has a thickness of about 0.0002" to about 0.0003". However, as can be appreciated by one skilled in the art, the thickness of the first coating 26 is not intended to be limiting, but merely teaches a preferred embodiment. As described below, the thickness of the first coating 26 of nodular thin dense chromium may be in a range of about 0.000040" to about 0.0007".

The first coating 26 of nodular thin dense chromium is applied by using a commercially available Armoloy® process that is widely available from franchised Armoloy® dealers located throughout the United States and Europe. A listing of Armoloy dealers can be obtained from The Armoloy Corporation, 114 Simonds Ave., Dekalb, Illinois, 60115.

The Armoloy® process is a proprietary chromium electroplating process that produces a nodular thin dense chromium coating having a hardness of at least 70 on the Rockwell "C" hardness scale (1020 - 1100 Vickers Diamond hardness). Current process capabilities produce a coating having a hardness of at least 78 on the Rockwell "C" hardness scale.

Another important aspect of Armoloy® process is the uniformity of the deposit thickness of the coatings, which are applied at thicknesses of about 0.000040" to about 0.0007". This is a beneficial factor in that thinner coatings can be applied with a higher degree of uniformity to a tightly toleranced component. The recommended deposit thickness range of 0.0001" to 0.0003" are uniform to within +/-0.000025". The Armoloy® process does not create "edge build-up" as can be appreciated by one skilled in the art.

The first coating 26 applied by the Armoloy® process withstands temperatures of about -400°F to about 1600°F (-240°C to 870°C). At elevated temperatures above 1200°F the first coating 26 will react with carbon monoxide, sulfur vapor, and phosphorous. A bright red heat oxidation occurs in steam or alkali hydroxide atmospheres. At temperatures above 1400°F, hardness and wear resistance will be reduced.

Further, the first coating 26 of nodular thin dense chromium features a microscopic pattern of nodularity. The nodularity reduces the coated surfaces exposed to parts in contact with it, thereby substantially reducing the wear and friction rate. Furthermore, micro-nodularity retains lubricants longer, further reducing friction. A static coefficient of friction may be as low as 0.12.

It is to be understood that the above description is intended to be illustrative and not limiting. Many embodiments will be apparent to those of skill in the art upon reading the above description. Therefore, the scope of the invention should be determined, not with reference to the above description, but instead with reference to the appended claims, along with the full scope of equivalents to which such claims are entitled.

## Claims

1. A piston ring comprising:
a plurality of surfaces,wherein at least one of said plurality of surfaces includes a first coating of nodular thin dense chromium.

2. A piston ring according to Claim 1, wherein said first coating has a thickness of about 0.0002" to about 0.0003".

3. A piston ring according to Claim 1, wherein said first coating has a hardness of at least 70 on the Rockwell "C" hardness scale.

4. A piston ring according to Claim 1, wherein said first coating has a static coefficient of friction of about 0.12.

5. A piston ring according to Claim 1, wherein said first coating withstands temperatures of about -400°F to about 1600°F

6. A piston ring according to Claim 1, wherein said plurality of surfaces includes upper and lower radially extending surfaces each including said first coating of nodular thin dense chromium.

7. A piston ring according to Claim 6, wherein said plurality of surfaces includes a radially inner vertical surface including said first coating of nodular thin dense chromium.

8. A piston ring according to Claim 1, wherein said plurality of surfaces includes a radially outer vertical surface having a second coating.

9. A piston ring according to Claim 8, wherein said second coating is a thermal spray coating.

10. A piston ring according to Claim 8, wherein said radially outer vertical surface is exclusive of said first coating.

11. A piston ring according to Claim 8, wherein said radially outer vertical surface having said second coating further includes said first coating of nodular thin dense chromium.

12. A piston ring comprising:
upper and lower radially extending surfaces;
a radially inner vertical surface;
a radially outer vertical surface; and
wherein said lower radially extending surface includes a first coating.

13. A piston ring according to Claim 12, wherein said upper radially extending surface includes said first coating.

14. A piston ring according to Claim 12, wherein said radially inner vertical surface includes said first coating

15. A piston ring according to Claim 12, wherein said first coating is nodular thin dense chromium.

16. A piston ring according to Claim 15, wherein said first coating has a hardness of at least 70 on the Rockwell "C" hardness scale.

17. A piston ring according to Claim 15, wherein said first coating has a static coefficient of friction of about 0.12.

18. A piston ring according to Claim 12, wherein said first coating has a thickness of about 0.0002" to about 0.0003".

19. A piston ring according to Claim 12, wherein said radially outer vertical surface includes a second coating of a thermal spray coating.

20. A piston ring according to Claim 19, wherein said radially outer vertical surface further includes said first coating.
